# EUROPEAN PATENT APPLICATION

(11) **EP 3 159 826 A1**
(43) Date of publication of application: **26.04.2017**
(21) Application number: 16163092.6
(22) Date of filing: 31.03.2016
(51) Int. Cl.: G06K 9/00

(54) **TERMINAL DEVICE WITH FUNCTION OF FINGERPRINT IDENTIFICATION**

(30) Priority: 22.10.2015 CN 201510695539
(71) Applicant: Xiaomi Inc., Beijing 100085 (CN)
(72) Inventor: JIANG, Zhongsheng, 100085 Haidian District (CN); YANG, Kun, 100085 Haidian District (CN); TAO, Jun, 100085 Haidian District (CN)
(74) Representative: Kudlek, Franz Thomas

(57) **Abstract**

The present disclosure relates to a terminal device with a function of fingerprint identification, belonging to technical fields of computer. The terminal device includes a control component (1) and a screen (2), and the screen includes a screen cover (3), a display component (4), a fingerprint detection element (5) and a plurality of touch signal detection elements (6), wherein: the fingerprint detection element and the plurality of touch signal detection elements are provided between the screen cover and a top surface of the display component; the fingerprint detection element is provided in a free area among different ones of the touch signal detection elements; and the control component is electrically connected with the fingerprint detection element and configured to acquire detection signal of the fingerprint detection element, generate fingerprint data based on the detection signal of the fingerprint detection element, compare the fingerprint data with reference fingerprint data stored in advance, and execute a preset control instruction if the fingerprint data is matched with reference fingerprint data. According to the present disclosure, strength of the screen cover can be improved.

## Description

### TECHNICAL FIELD

The present disclosure relates to fields of computer technology, and more particularly, to terminal device with a function of fingerprint identification.

### BACKGROUND

With development of technology on mobile terminals, they are more and more widely used and have become one of most important tools for daily work and life. As a mobile terminal is used, it is provided therein with a function of fingerprint identification, for performing operations requiring a relatively high level of security, such as unlock and payment, on the mobile terminal, so as to secure user privacy.

Conventionally, a fingerprint detector may be provided in the mobile terminal to detect images of fingerprints. In particular, a detection opening is provided on a screen cover at a position corresponding to the fingerprint detector, over which a user can place his/her finger to be in contact with a detection end of the fingerprint detector, thereby enabling the fingerprint detector to generate fingerprint image data based on detection signal. In this way, the mobile terminal is able to perform a process of fingerprint identification.

Through implementation of the present disclosure, there are found at least following problems.

The cover may have a relatively poor strength and thus is fragile, due to providing of the detection opening on the cover at the position corresponding to the fingerprint detector.

### SUMMARY

Accordingly, there is provided a terminal device with a function of fingerprint identification. Technical solutions are as follows.

According to a first aspect of the present disclosure, there is provided a terminal device with a function of fingerprint identification. The terminal device includes a control component and a screen, and the screen includes a screen cover, a display component, a fingerprint detection element and a plurality of touch signal detection elements. Herein:
the fingerprint detection element and the plurality of touch signal detection elements are provided between the screen cover and a top surface of the display component;
the fingerprint detection element is provided in a free area among different ones of the touch signal detection elements; and
the control component is electrically connected with the fingerprint detection element and configured to acquire detection signal of the fingerprint detection element, generate fingerprint data based on the detection signal of the fingerprint detection element, compare the fingerprint data with reference fingerprint data stored in advance, and execute a preset control instruction if the fingerprint data is matched with reference fingerprint data.

In an embodiment, the control component includes a fingerprint reader and a processor;
the fingerprint reader is electrically connected with the fingerprint detection element and is electrically connected with the processor;
the fingerprint reader is configured to acquire the detection signal of the fingerprint detection element and generate the fingerprint data based on the detection signal of the fingerprint detection element; and
the processor is configured to compare the fingerprint data with the reference fingerprint data stored in advance, and execute the preset control instruction if the fingerprint data is matched with reference fingerprint data.

In an embodiment, the control component further includes a touch controller; and the touch controller is electrically connected with respective one of the plurality of touch signal detection elements and is electrically connected with the processor.

In an embodiment, the fingerprint detection element is formed in shape of a strip.

In an embodiment, there are a plurality of the fingerprint detection elements arranged in parallel.

In an embodiment, the fingerprint detection element is provided widthwise in the free area among the different ones of the touch signal detection elements; or
the fingerprint detection element is provided lengthwise in the free area among the different ones of the touch signal detection elements.

In an embodiment, the fingerprint detection element is provided in a lower half area between the screen cover and the top surface of the display component.

In this way, it is convenient for a user to perform operation.

In an embodiment, a transparent film is provided between the screen cover and the display component of the screen, and the plurality of touch signal detection elements and the fingerprint detection element are provided on the transparent film.

In this way, it can be avoided waste of the screen due to assembly error of the touch signal detection element and the fingerprint detection element, thus resource utilization can be improved.

In an embodiment, the fingerprint detection element is made of any one or more materials selected from a group including nano silver, carbon nano tube and graphene.

In an embodiment, the control component is configured to:
acquire a capacitance value detected by the fingerprint detection element and generate the fingerprint data based on the capacitance value detected by the fingerprint detection element.

Technical solution according to embodiments of the present disclosure may provide, at least in part, following advantageous effects.

According to an embodiment of the present disclosure, the terminal device includes the control component and the screen, and the screen includes the screen cover, the display component, the fingerprint detection element and the plurality of touch signal detection elements. In an embodiment, the fingerprint detection element and the plurality of touch signal detection elements are provided between the screen cover and the top surface of the display component; the fingerprint detection element is provided in the free area among different ones of the touch signal detection elements; the control component is electrically connected with the fingerprint detection element and configured to acquire detection signal of the fingerprint detection element, generate fingerprint data based on the detection signal of the fingerprint detection element, compare the fingerprint data with the reference fingerprint data stored in advance, and execute the preset control instruction if the fingerprint data is matched with reference fingerprint data. Thus, the terminal device is able to perform the fingerprint identification based on the detection signal from the fingerprint detection element sandwiched between the screen cover and the top surface of the display component without necessity of detection opening provided on the screen cover, such that strength of the screen cover can be improved.

It is to be understood that both the foregoing general description and the following detailed description are exemplary and explanatory only and are not restrictive of the present disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a block diagram illustrating a terminal device according to an exemplary embodiment.
Fig. 2 is a block diagram illustrating a terminal device according to an exemplary embodiment.
Fig. 3 is a block diagram illustrating a terminal device according to an exemplary embodiment.
Fig. 4 is a block diagram illustrating a terminal device according to an exemplary embodiment.
Fig. 5 is a block diagram illustrating a terminal device according to an exemplary embodiment.
Figs. 6a and 6b are block diagrams illustrating a terminal device according to an exemplary embodiment.
Figs. 7a and 7b are block diagrams illustrating a terminal device according to an exemplary embodiment.

**Reference numbers are described as follows.**

| | |
|---|---|
| 1. Control component | 2. Screen |
| 3. Screen cover | 4. Display component |
| 5. Fingerprint detection element | 6. Touch signal detection element |
| 7. Fingerprint reader | 8. Processor |
| 9. Touch controller | |

Specific embodiments of the present disclosure are shown by the above drawings, and more detailed description will be made hereinafter. These drawings and text description are not for limiting the scope of the present disclosure concept in any way, but for illustrating the concept of the present disclosure for those skilled in the art by referring to specific embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

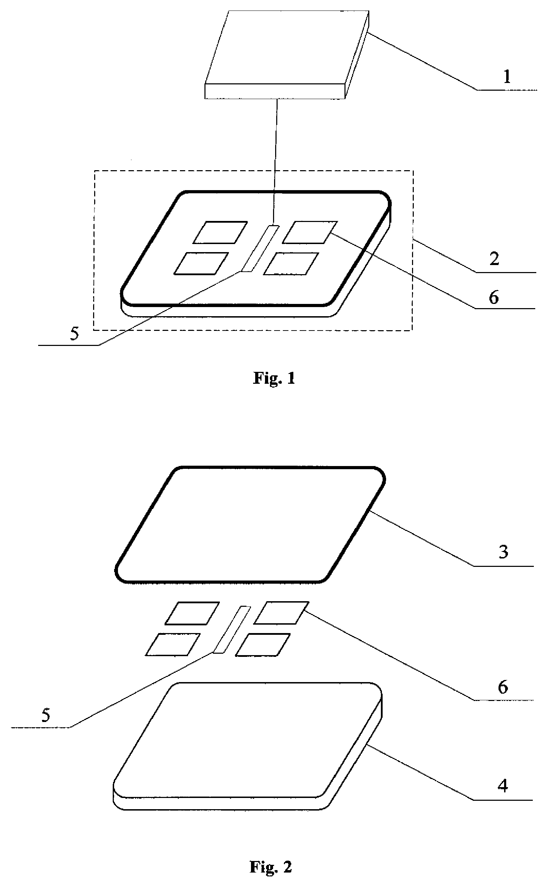

There is provided a terminal device with a function of fingerprint identification according to an exemplary embodiment of the present disclosure. As shown in Fig. 1, the terminal device includes a control component 1 and a screen 2. As shown in Fig. 2, the screen 2 includes a screen cover 3, a display component 4, a fingerprint detection element 5 and a plurality of touch signal detection elements 6.

In an embodiment, the fingerprint detection element 5 and the plurality of touch signal detection elements 6 are provided between the screen cover 3 and a top surface of the display component 4; the fingerprint detection element 5 is provided in a free area among different ones of the touch signal detection elements 6; the control component 1 is electrically connected with the fingerprint detection element 5 and configured to acquire detection signal of the fingerprint detection element 5, generate fingerprint data based on the detection signal of the fingerprint detection element 5, compare the fingerprint data with reference fingerprint data stored in advance, and execute a preset control instruction if the fingerprint data is matched with reference fingerprint data.

According to an embodiment of the present disclosure, the terminal device includes the control component and the screen, and the screen includes the screen cover, the display component, the fingerprint detection element and the plurality of touch signal detection elements. In an embodiment, the fingerprint detection element and the plurality of touch signal detection elements are provided between the screen cover and the top surface of the display component; the fingerprint detection element is provided in the free area among different ones of the touch signal detection elements; the control component is electrically connected with the fingerprint detection element and configured to acquire detection signal of the fingerprint detection element, generate fingerprint data based on the detection signal of the fingerprint detection element, compare the fingerprint data with the reference fingerprint data stored in advance, and execute the preset control instruction if the fingerprint data is matched with reference fingerprint data. Thus, the terminal device is able to perform the fingerprint identification based on the detection signal from the fingerprint detection element sandwiched between the screen cover and the top surface of the display component without necessity of detection opening provided on the screen cover, such that strength of the screen cover can be improved.

There is provided a terminal device with a function of fingerprint identification according to another exemplary embodiment of the present disclosure. The terminal device includes a control component 1 and a screen 2. The screen 2 includes a screen cover 3, a display component 4, a fingerprint detection element 5 and a plurality of touch signal detection elements 6. In an embodiment, the fingerprint detection element 5 and the plurality of touch signal detection elements 6 are provided between the screen cover 3 and a top surface of the display component 4; the fingerprint detection element 5 is provided in a free area among different ones of the touch signal detection elements 6; the control component 1 is electrically connected with the fingerprint detection element 5 and configured to acquire detection signal of the fingerprint detection element 5, generate fingerprint data based on the detection signal of the fingerprint detection element 5, compare the fingerprint data with reference fingerprint data stored in advance, and execute a preset control instruction if the fingerprint data is matched with reference fingerprint data.

In an embodiment, the terminal device may include the control component 1 and the screen 2. In an embodiment, the screen 2 may include the screen cover 3, the display component 4, the fingerprint detection element 5 and the plurality of touch signal detection elements 6. The fingerprint detection element 5 and the touch signal detection element(s) 6 may be made of any one or more materials selected from a group including nano silver, carbon nano tube, and graphene, or may include copper wire. Those materials may be formed into metallic nano wire to be provided between the screen cover 3 and the top surface of the display component 4. For example, the fingerprint detection element 5 and the touch signal detection element(s) 6 can be provided directly on the top surface of the display component 4. The touch signal detection element(s) 6 can be arranged in a certain manner, while the fingerprint detection element 5 can be provided in the free area among different ones of the touch signal detection element(s) 6. As designed in this way, the screen cover 3 may be formed into a flat structure without any opening, thereby improving strength of the screen cover 3 and thus prevent the screen cover 3 from being broken in case of dropping off the terminal device.

The control component 1 may be provided inside the terminal device and electrically connected with the fingerprint detection element 5, so as to acquire the detection signal from the fingerprint detection element 5 and generate the fingerprint data based on the detection signal from the fingerprint detection element 5. Furthermore, the control component 1 may be provided with a signal filter, an amplifier circuit, an AD (Analog Digital) sample module and the like, so as to perform filtering and amplification of the detection signal from the fingerprint detection element 5. The reference fingerprint data may be stored in the control component 1 in advance and may be obtained by determining an average value of a user's fingerprint data through multiple detections. The user can select a fingerprint setting option via an interface for setting fingerprint on the terminal device, such that the terminal device will receive a fingerprint setting instruction. Consequently, the control component 1 is able to acquire the detection signal from the fingerprint detection element 5 and generate the fingerprint data for a further storage. Multiple detections may be performed for the user's fingerprint by the terminal device, such that the control component 1 can determine the average value of the fingerprint data, obtained through multiple detections, as the reference fingerprint data.

Then, the control component 1 can compare the fingerprint data generated with the reference fingerprint data stored in advance, so as to determine similarity between the fingerprint data generated and the reference fingerprint data. A preset instruction is executed by the control component 1, if the similarity between the fingerprint data generated and the reference fingerprint data falls within a preset similarity range. After determining that the similarity between the fingerprint data generated and the reference fingerprint data falls within the preset similarity range, the control component 1 can detect a currently displayed interface of the terminal device and execute various control instructions based on the currently displayed interface. For example, after determining that the similarity between the fingerprint data generated and the reference fingerprint data falls within the preset similarity range, the control component 1 may perform an unlock process if it is detected an unlocking interface is currently displayed on the terminal device, and may perform a payment process if it is detected a payment interface is currently displayed on the terminal device.

Alternatively, the control component 1 may include a fingerprint reader 7 and a processor 8. The fingerprint reader 7 may be electrically connected with the fingerprint detection element 5 and electrically connected with the processor 8. In an embodiment, the fingerprint reader 7 is configured to acquire the detection signal of the fingerprint detection element 5 and generate the fingerprint data based on the detection signal of the fingerprint detection element 5. In an embodiment, the processor 8 is configured to compare the fingerprint data with the reference fingerprint data stored in advance, and execute the preset control instruction if the fingerprint data is matched with reference fingerprint data.

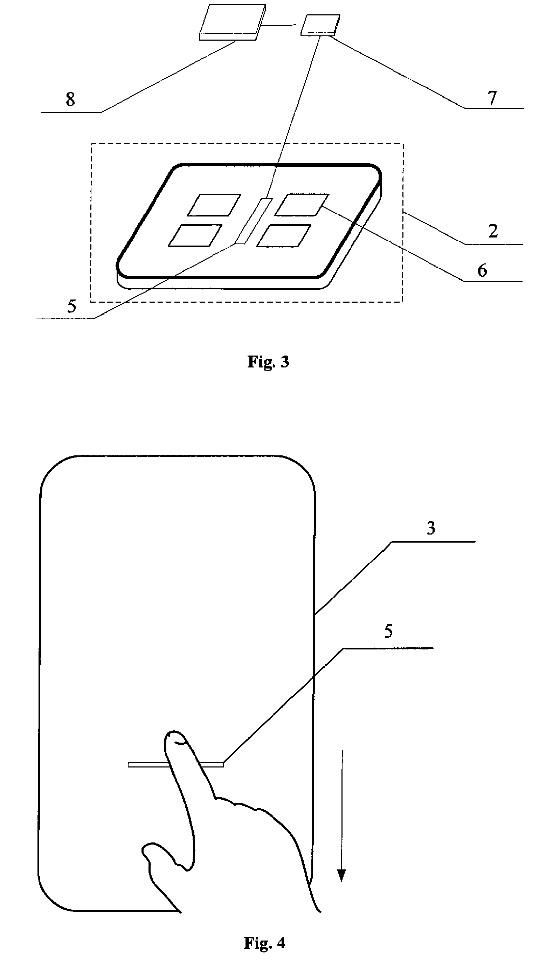

In an embodiment, as shown in Fig. 3, the control component 1 includes the fingerprint reader 7 and the processor 8. The fingerprint reader 7 and the processor 8 are provided inside the terminal device. The fingerprint reader 7 is electrically connected with the fingerprint detection element 5 and electrically connected with the processor 8. Moreover, the fingerprint reader 7 acquires the detection signal of the fingerprint detection element 5, processes and converts the detection signal into data identifiable and processible by the processor 8, that is, generates the fingerprint data, and transmits the fingerprint data generated to the processor 8.

The reference fingerprint data may be stored in the processor 8 in advance and may be obtained by determining an average value of a user's fingerprint data through multiple detections. The user can select a fingerprint setting option via an interface for setting fingerprint on the terminal device, such that the terminal device will receive a fingerprint setting instruction. Consequently, the fingerprint reader 7 of the terminal device is able to acquire the detection signal from the fingerprint detection element 5, then generate the fingerprint data, and transmit the fingerprint data to the processor 8. The processor 8 can store the fingerprint data received. Multiple detections may be performed for the user's fingerprint by the terminal device, and the fingerprint data obtained through the multiple detections can be transmitted to the processor, such that the processor 8 can determine, after receiving the fingerprint data, the average value thereof as the reference fingerprint data.

After receiving the fingerprint data, the processor 8 can compare the fingerprint data received with the reference fingerprint data stored in advance, so as to determine similarity between the fingerprint data received and the reference fingerprint data. A preset instruction is executed by the processor 8, if the similarity between the fingerprint data received and the reference fingerprint data falls within a preset similarity range. After determining that the similarity between the fingerprint data received and the reference fingerprint data falls within the preset similarity range, the processor 8 can detect a currently displayed interface of the terminal device and execute various control instructions based on the currently displayed interface. For example, after determining that the similarity between the fingerprint data received and the reference fingerprint data falls within the preset similarity range, the processor 8 may perform an unlock process if it is detected an unlocking interface is currently displayed on the terminal device, and may perform a payment process if it is detected a payment interface is currently displayed on the terminal device.

In an embodiment, the control component 1 may further include a touch controller 9, and the touch controller 9 may be electrically connected with respective one of the plurality of touch signal detection elements 6 and electrically connected with the processor 8.

In an embodiment, the control component 1 further includes the touch controller 9, and the touch controller 9 is electrically connected with respective one of the plurality of touch signal detection elements 6 and electrically connected with the processor 8. The touch controller 9 can acquire detection signal from respective one of the touch signal detection elements 6, convert the acquired detection signal into touch data identifiable and processible by the processor 8, and transmit the touch data to the processor 8. The processor 8 can receive the touch data transmitted from the touch controller 9 and execute a corresponding control instruction according to the touch data received. For example, an application program may be launched if a short process of a user on an icon of the application program is detected, while a management operation such as deletion may be performed with respect to the application program if a long process of the user on the icon of the application program is detected.

In an embodiment, the fingerprint detection element 5 may be a strip fingerprint detection element 5.

In an embodiment, the fingerprint detection element 5 is a strip fingerprint detection element 5. As an operation of fingerprint identification is performed by a user, he/she may slide a finger within a region corresponding to the fingerprint detection element 5. An angle between sliding direction of the finger and the strip fingerprint detection element 5 should meet a preset condition. For example, the sliding direction is required to be perpendicular to the strip fingerprint detection element 5, or the angle between the sliding direction and the strip fingerprint detection element 5 is required to be greater than a preset threshold, as shown in Fig. 4.

In an embodiment, there may be a plurality of fingerprint detection elements 5 which may be arranged in parallel with each other.

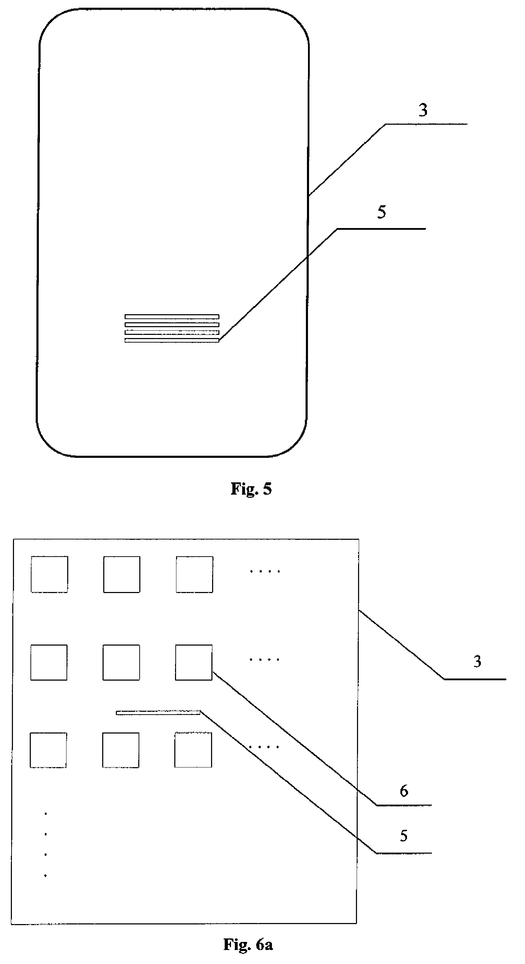

In an embodiment, there is one or more fingerprint detection elements 5. In case of a plurality of fingerprint detection elements 5, they are arranged in parallel, as shown in Fig. 5. In this way, a relatively large finger area may be detectable, thereby improving efficiency of detection.

In an embodiment, a transparent film may be provided between the screen cover 3 and the display component 4 of the screen 2, and the touch signal detection elements 6 and the fingerprint detection element 5 can be provided on the transparent film.

In an embodiment, the transparent film is provided between the screen cover 3 and the display component 4 of the screen 2, and the touch signal detection elements 6 and the fingerprint detection element 5 are provided on the transparent film. In manufacture process, owing to low cost of the transparent film, it can be efficiently avoided waste of the screen cover due to assembly error of the touch signal detection element 6 and the fingerprint detection element 5, thus resource utilization can be improved.

In an embodiment, the fingerprint detection element 5 may be provided widthwise in a free area among the different ones of the touch signal detection elements 6; or, the fingerprint detection element 5 may be also provided lengthwise in the free area among the different ones of the touch signal detection elements 6.

In an embodiment, there may be various ways for arrangement of the fingerprint detection element 5. In case of a strip fingerprint detection element 5, it may be arranged in any way within a free area among the different ones of the touch signal detection elements 6. For convenience of a user's sliding operation for fingerprint identification, the fingerprint detection element 5 may be provided widthwise in a free area among the different ones of the touch signal detection elements 6; or, the fingerprint detection element 5 may also be provided lengthwise in the free area among the different ones of the touch signal detection elements 6; or, the fingerprint detection element 5 may also be provided diagonally in the free area among the different ones of the touch signal detection elements 6. There may be variety of arrangement manners for the touch signal detection elements 6, in which two typical ones will be described as follows.

In a first manner, the touch signal detection elements 6 are arranged in dot matrix between the screen cover 3 and the top surface of the display component 4.

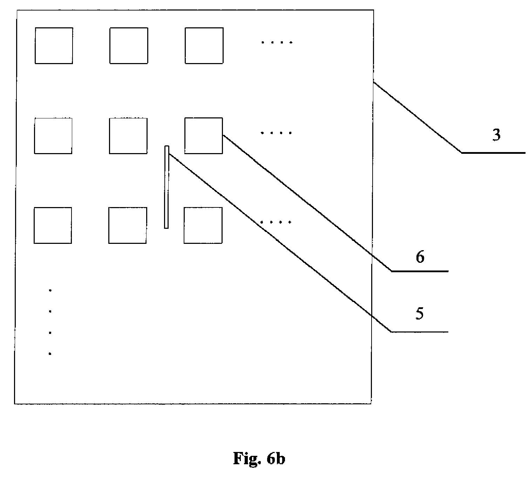

In an embodiment, the touch signal detection element 6 may be a dotted touch signal detection element 6. For example, the touch signal detection element 6 may be formed in shape of a round dot or a square block and distributed uniformly in dot matrix between the screen cover 3 and the top surface of the display component 4, that is, distributed with fixed row spacing and fixed column spacing. The fingerprint detection element 5 may be provided widthwise in a free area among the touch signal detection elements 6 arranged in dot matrix, or may be also provided lengthwise in the free area among the touch signal detection elements 6 arranged in dot matrix, as shown in Figs. 6a and 6b.

In a second manner, the touch signal detection elements 6 are formed in shape of a strip, and the strip touch signal detection elements 6 are arranged in staggered widthwise and lengthwise between the screen cover 3 and the top surface of the display component 4.

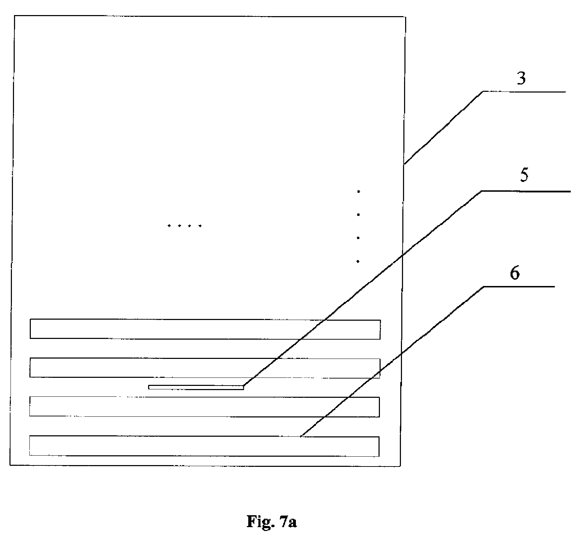

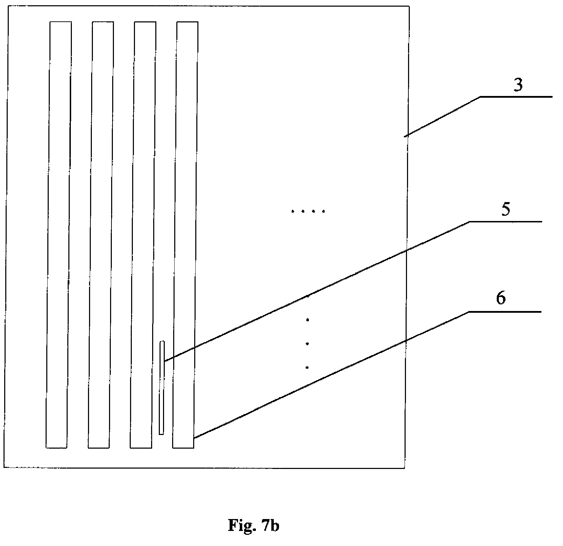

In an embodiment, the touch signal detection elements 6 may be formed in shape of a strip, and the strip touch signal detection elements 6 may be arranged in staggered widthwise and lengthwise between the screen cover 3 and the top surface of the display component 4. There may be transparent films provided between the screen cover 3 and the display component 4 of the screen 2, where the touch signal detection elements 6 arranged widthwise may be provided on a first transparent film while those ones arranged lengthwise may be provided on a second transparent film. Both the first and second transparent films can be provided between the screen cover and the top surface of the display component 4. The fingerprint detection element 5 may be provided widthwise in a free area among the touch signal detection elements 6 arranged widthwise, or may be also provided lengthwise in the free area among the touch signal detection elements 6 arranged lengthwise, as shown in Figs. 7a and 7b.

In an embodiment, the fingerprint detection element 5 may be provided in a lower half area between the screen cover 3 and the top surface of the display component 4.

In an embodiment, the fingerprint detection element 5 may be provided in any area between the screen cover 3 and the top surface of the display component 4. For convenience of a user's sliding operation for fingerprint identification, the fingerprint detection element 5 is provided in the lower half area between the screen cover 3 and the top surface of the display component 4. In particular, the fingerprint detection element may be provided in the middle of the lower half area, or may be also provided at the right side of the lower half area.

In an embodiment, the control component 1 is configured to acquire a capacitance value detected by the fingerprint detection element 5 and generate the fingerprint data based on the capacitance value detected by the fingerprint detection element 5.

In an embodiment, bulge portions on a surface of the fingerprint may be referred to as ridge, while recess portions thereon may be referred to as valley. When a user touches the screen 2 with a finger, a distance between the ridge and the fingerprint detection element 5 is different from that between the valley and the fingerprint detection element 5. Since capacitance values detected by the fingerprint detection element 5 depend on a distance between a detected object and the fingerprint detection element 5, different capacitance values will be derived at the ridge and the valley by the fingerprint detection element 5 covered by the finger. As the user's finger slides on the fingerprint detection element 5, the fingerprint detection element 5 can obtain capacitance values through continuous detection. In this way, the control component 1 can receive all of capacitance values detected by the fingerprint detection element 5, and generate the fingerprint data based on the detected capacitance values. Then, the control component 1 can compare the generated fingerprint data with the reference fingerprint data stored in advance, so as to determine similarity between the generated fingerprint data and the reference fingerprint data. A preset instruction will be executed by the control component 1, if the similarity between the generated fingerprint data and the reference fingerprint data falls within a preset similarity range. After determining that the similarity between the generated fingerprint data and the reference fingerprint data falls within the preset similarity range, the control component 1 can detect a currently displayed interface of the terminal device and execute various control instructions based on the currently displayed interface.

According to an embodiment of the present disclosure, the terminal device includes the control component and the screen, and the screen includes the screen cover, the display component, the fingerprint detection element and the touch signal detection elements. In an embodiment, the fingerprint detection element and the touch signal detection elements are provided between the screen cover and the top surface of the display component; the fingerprint detection element is provided in the free area among different touch signal detection elements; the control component is electrically connected with the fingerprint detection element and configured to acquire detection signal from the fingerprint detection element, generate fingerprint data based on the detection signal from the fingerprint detection element, compare the fingerprint data with prestored reference fingerprint data, and execute a preset control instruction if the fingerprint data is matched with reference fingerprint data. Thus, the terminal device is able to perform the fingerprint identification based on the detection signal from the fingerprint detection element sandwiched between the screen cover and the top surface of the display component without necessity of detection opening provided on the screen cover, such that strength of the screen cover can be improved.

## Claims

1. A terminal device with a function of fingerprint identification, comprising a control component (1) and a screen (2), the screen comprising a screen cover (3), a display component (4), a fingerprint detection element (5) and a plurality of touch signal detection elements (6), **characterized in that**,
the fingerprint detection element (5) and the plurality of touch signal detection elements (6) are provided between the screen cover (3) and a top surface of the display component (4);
the fingerprint detection element (5) is provided in a free area among different ones of the touch signal detection elements (6); and
the control component (1) is electrically connected with the fingerprint detection element (5) and configured to acquire detection signal of the fingerprint detection element (5), generate fingerprint data based on the detection signal of the fingerprint detection element (5), compare the fingerprint data with reference fingerprint data stored in advance, and execute a preset control instruction if the fingerprint data is matched with reference fingerprint data.

2. The terminal device of claim 1, wherein the control component comprises a fingerprint reader (7) and a processor (8);
the fingerprint reader is electrically connected with the fingerprint detection element and is electrically connected with the processor;
the fingerprint reader is configured to acquire the detection signal of the fingerprint detection element and generate the fingerprint data based on the detection signal of the fingerprint detection element; and
the processor is configured to compare the fingerprint data with the reference fingerprint data stored in advance, and execute the preset control instruction if the fingerprint data is matched with reference fingerprint data.

3. The terminal device of claim 2, wherein the control component further comprises a touch controller (9); and
the touch controller is electrically connected with respective one of the plurality of touch signal detection elements and is electrically connected with the processor.

4. The terminal device of any one of the preceding claims, wherein the fingerprint detection element is formed in shape of a strip.

5. The terminal device of claim 4, wherein there are a plurality of the fingerprint detection elements arranged in parallel.

6. The terminal device of claim 4 of 5, wherein the fingerprint detection element is provided widthwise in the free area among the different ones of the touch signal detection elements; or
the fingerprint detection element is provided lengthwise in the free area among the different ones of the touch signal detection elements.

7. The terminal device of any one of the preceding claims, wherein the fingerprint detection element is provided in a lower half area between the screen cover and the top surface of the display component.

8. The terminal device of any one of the preceding claims, wherein a transparent film is provided between the screen cover and the display component of the screen, and the plurality of touch signal detection elements and the fingerprint detection element are provided on the transparent film.

9. The terminal device of any one of the preceding claims, wherein the fingerprint detection element is made of any one or more materials selected from a group comprising nano silver, carbon nano tube and graphene.

10. The terminal device of any one of the preceding claims, wherein the control component is configured to acquire a capacitance value detected by the fingerprint detection element and generate the fingerprint data based on the capacitance value detected by the fingerprint detection element.
